# DEMANDE DE BREVET EUROPEEN

(11) **EP 1 118 776 A1**
(43) Date de publication de la demande: **25.07.2001**
(21) Numéro de dépôt: 01400148.1
(22) Date de dépôt: 19.01.2001
(51) Int. Cl.: F16B 2/20, F16L 3/13, B60T 17/04

(54) **Dispositif et procédé de montage d'un conduit sur un organe mécanique**

(30) Priorité: 21.01.2000 FR 0000756
(71) Demandeur: Renault, 92100 Boulogne Billancourt (FR)
(72) Inventeur: Jumel, Daniel, 78200 Mantes la Jolie (FR)

(57) **Abrégé**

Dispositif de montage d'un conduit sur un organe mécanique comportant d'une part une attache (1) rapportée directement sur cet organe, qui présente une patte de fixation (7) disposant d'un trou de fixation (8) et d'un doigt d'indexage (9) séparés par un renfoncement (22), et d'autre part un support de tube (2) présentant une première partie (11) recevant le conduit, et une seconde partie (12) de montage sur l'attache (1) munie de moyens de mise en place, d'indexage et d'immobilisation sur celle-ci, caractérisé en ce que lesdits moyens comprennent un élément d'introduction (19) sur le doigt d'indexage (9), un élément d'engagement (14) sur la patte de fixation (7), une butée d'arrêt (21) en position indexée, et un bossage anti-lâcher (17) interdisant le retrait involontaire du support (2) hors de l'attache (1) après l'indexage.

## Description

La présente invention concerne la fixation d'un support de conduit sur une pièce solidaire d'une partie fixe d'un véhicule routier, telle qu'un bloc moteur.

Plus précisément, elle concerne le montage d'un conduit sur un organe mécanique, au moyen d'un dispositif comportant d'une part une attache de fixation rapportée directement sur cet organe, qui présente une patte de fixation disposant d'un trou de fixation et d'un doigt d'indexage séparés par un renfoncement, et d'autre part un support de conduit présentant une première partie recevant le conduit, et une seconde partie de montage sur l'attache munie de moyens de mise en place, d'indexage et d'immobilisation sur celle-ci coopérant avec le trou de fixation et avec le doigt d'indexage de l'attache.

Cette invention trouve une application privilégiée pour fixer un élément de support de conduit d'admission d'air frais sur une attache de levage moteur elle-même montée sur la culasse, ce qui revient à utiliser une pièce intermédiaire déjà présente sur la culasse dans un autre but.

Toutefois, cette application n'est pas limitative, et l'invention peut être mise en oeuvre pour monter tout type de support d'élément flexible (canalisation, conduit, câblage, etc...,), sur d'autres parties fixes de véhicule, par exemple un bac à batterie.

Dans le cas particulier d'un support de conduit d'admission d'air frais de filtre à air, il est nécessaire de respecter un positionnement angulaire très précis vis-à-vis du bloc moteur .

Si le support de conduit est monté sur une attache déjà présente sur le moteur, cette attache ne peut faire l'objet d'aucun réajustement ultérieur en usine de montage véhicule. La disposition de l'attache vis-à-vis du bloc moteur étant figée, il est donc possible de prévoir un indexage automatique du support par rapport à l'attache.

Selon l'état de la technique connue dans ce domaine, l'attache de levage de moteur comporte d'une part une oreille percée qui reçoit la vis de fixation du conduit, et d'autre part un élément anti-rotation se présentant le plus souvent sous la forme d'un doigt perpendiculaire au plan de l'oreille.

Lors du montage, l'opérateur prend le support et le boulon, il présente le support sur l'attache, engage la fente d'indexation du support sur le doigt jusqu'à la position d'indexage, et engage alors la vis dans l'écrou.

Selon ce mode de montage connu, le support n'est donc définitivement immobilisé dans la position souhaitée, qu'à l'issue d'une opération de vissage.

Outre les difficultés opératoires liées à la recherche de la position d'indexage, à l'introduction de la vis et au maintien du support pendant le vissage, cette méthode pénalise le rendement de la chaîne d'assemblage véhicule, et introduit un risque de perte de vis en roulage.

La présente invention vise à faciliter et à fiabiliser le montage d'un support de conduit sur une attache intermédiaire rapportée sur un organe mécanique, en autorisant simultanément un gain de temps sur chaîne d'assemblage véhicule et une économie appréciable sur les pièces utilisées

A cet effet, elle propose que les moyens de mise en place, d'indexage et d'immobilisation du support sur l'attache comprennent un élément d'introduction sur le doigt d'indexage, un élément d'engagement sur la patte de fixation , une butée d'arrêt en position indexée, et un bossage anti-lâcher interdisant le retrait involontaire du support hors de l'attache après l'indexage.

De préférence, le bossage est porté par l'élément d'engagement, et coopère avec le trou de fixation de l'attache et l'élément d'introduction a une forme en U.

L'invention concerne également un procédé de montage d'un support de conduit sur un organe mécanique avec indexage automatique de ce support sur une attache intermédiaire rapportée sur ledit organe, cette attache étant munie d'une patte disposant d'un trou de fixation et d'un doigt d'indexage séparés par un renfoncement.

Conformément à l'invention, on introduit verticalement le support sur le doigt d'indexage, avant de l'engager autour de la patte par un mouvement de rotation horizontal autour du doigt, jusqu'à sa position d'indexage.

D'autres caractéristiques et avantages de la présente invention apparaîtront clairement à la lecture de la description suivante d'un mode de réalisation particulier de celle-ci, en se reportant aux dessins annexés, sur lesquels :
- la figure 1 représente une attache pour support de conduite de type connu, et
- les figures 2A, 2B et 2C, se rapportent au support de conduite proposé par l'invention.

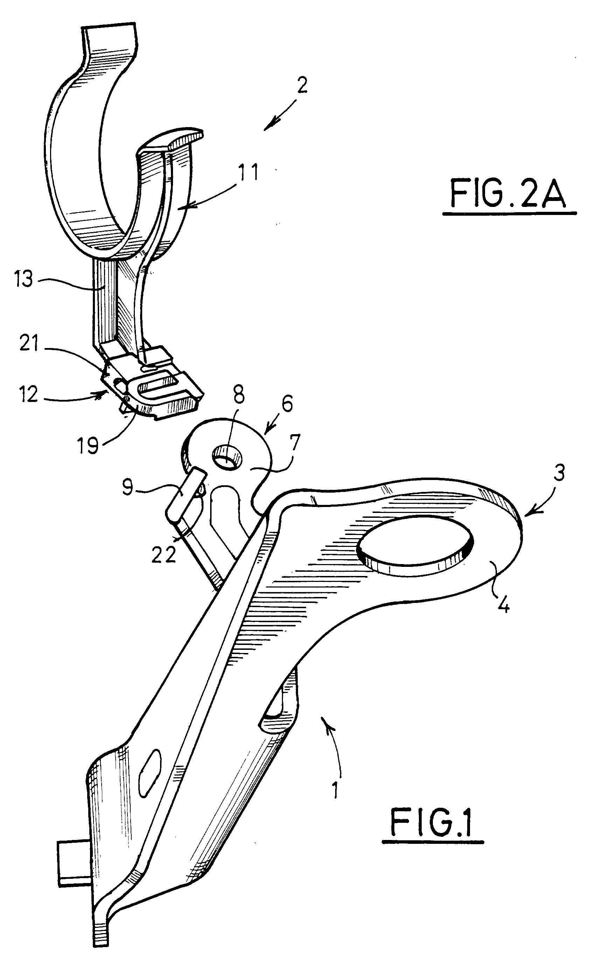

L'attache de fixation 1 de support de conduit montée habituellement sur les culasses de moteur, qui est représentée en perspective sur la figure 1, comporte une première partie 3 avec un anneau de levage 4 du moteur, et une deuxième partie 6 qui reçoit le support de conduit 2. La deuxième partie 6 de l'attache 1 présente une extrémité 7 qui se présente sous la forme d'une patte circulaire avec un trou de fixation 8 pour le support de conduit 2, cette patte 7 étant séparée par un renfoncement 22, d'un doigt d'anti-rotation ou d'indexage 9 perpendiculaire à son plan, et étant munie par ailleurs d'un écrou (non représenté) soudé sous le trou 8.

Les supports de conduit montés jusqu'à ce jour sur une attache de ce type, présentent simplement une partie plane de fixation sur l'attache, munie d'un trou de fixation permettant le passage d'une vis ou d'un boulon fileté, et d'une fente d'indexage sur le doigt d'indexage.

Comme indiqué plus haut, lors du montage d'un tel support de conduit sur l'attache 1, l'opérateur prend le support et la vis. Il présente le support vis-à-vis de l'attache, en engageant la fente sur le doigt 9, et introduit la vis dans l'écrou.

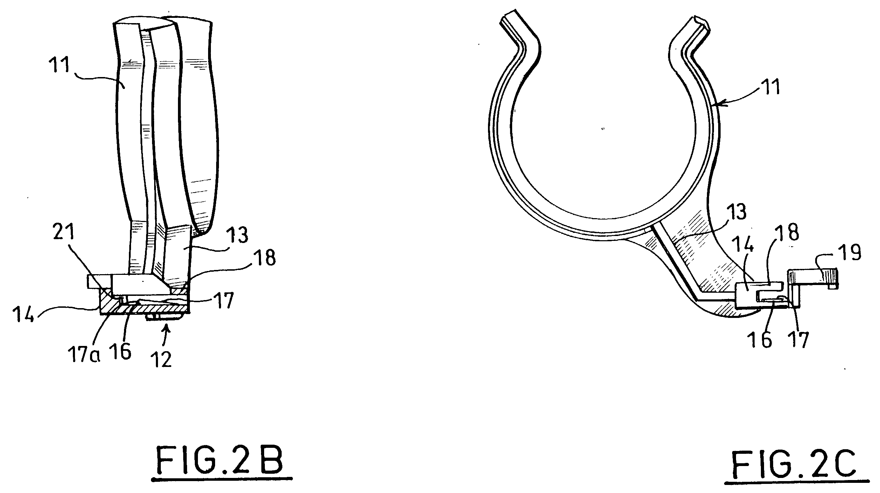

Conformément à l'invention, l'attache n'a plus d'écrou. Le support 2 proposé par l'invention, et illustré de façon non limitative par les figures 2A, 2B, 2C, comporte une première partie 11 recevant le conduit, et une seconde partie 12, qui permet son montage instantané avec indexage automatique sur l'attache. Elle est raccordée à la première partie 11 par un bras 13.

La partie de montage 12 présente un élément d'engagement, tel qu'un étrier 14, dont une branche inférieure 16 présente un bossage 17 « anti-lâcher », destiné à s'engager à l'intérieur du trou de fixation 8 de l'attache lors du montage. Ce bossage est incliné de façon à constituer une surépaisseur croissante en partant de l'entrée de l'étrier, avec une découpe droite 17a en extrémité arrière, qui permet d'immobiliser le support 2 vis-à-vis du trou 8, après son engagement sur la patte 7.

La branche supérieure 18 de l'étrier 14 porte pour sa part un élément d'introduction, tel qu'un un oeillet 19 en forme de U, qui est destiné à s'engager sur le doigt d'indexage 9.

Lors du montage, l'opérateur engage verticalement vers le bas l'oeillet 19 du support 2 sur le doigt 9, et fait ensuite tourner horizontalement le support 2 autour de celui-ci. Au cours de ce déplacement en rotation, l'étrier s'engage sur la patte 7, en se déformant élastiquement pour laisser passer le bossage 17 jusqu'à ce que ce dernier soit complètement introduit dans le trou 8. Le support 2 est alors bloqué en rotation sur la patte 7 avec l'orientation souhaitée vis-à-vis de l'attache 1.

Cette position de blocage est atteinte lorsque la butée d'arrêt 21 du support qui raccorde les deux branches de l'étrier 14 atteint le fond du renfoncement 22, entre la patte 7 et le doigt 9 de l'attache 1.

La découpe droite 17a du bossage interdit alors le retrait du support hors de l'attache, sauf si l'on écrase fortement le bossage 17 avec un outil par le dessus du trou 8, pour démonter le support.

Comme on l'aura compris, le démontage s'effectue en exerçant une poussée verticale sur le bossage au travers du trou en faisant simultanément tourner le support dans le sens inverse du montage, jusqu'à retrouver la disposition angulaire relative initiale de l'attache et du support, puis en retirant le support vers le haut à l'écart de l'attache.

## Revendications

1. Dispositif de montage d'un conduit sur un organe mécanique comportant d'une part une attache (1) rapportée directement sur cet organe, qui présente une patte de fixation (7) disposant d'un trou de fixation (8) et d'un doigt d'indexage (9) séparés par un renfoncement (22), et d'autre part un support de conduit (2) présentant une première partie (11) recevant le conduit, et une seconde partie (12) de montage sur l'attache (1) munie de moyens de mise en place, d'indexage et d'immobilisation sur celle-ci, caractérisé en ce que lesdits moyens comprennent un élément d'introduction (19) sur le doigt d'indexage (9), un élément d'engagement (14) sur la patte de fixation (7), une butée d'arrêt (21) en position indexée, et un bossage anti-lâcher (17) interdisant le retrait involontaire du support (2) hors de l'attache (1) après indexage.

2. Dispositif de montage selon la revendication 1, caractérisé en ce que le bossage (17) est porté par l'élément d'engagement (14), et coopère avec le trou de fixation (8) de l'attache (1).

3. Dispositif de montage selon la revendication 1 ou 2, caractérisé en ce que l'élément d'introduction (19) a une forme en U.

4. Dispositif de montage selon la revendication 1, 2 ou 3, caractérisé en ce que l'élément d'introduction (19) est porté par l'élément d'engagement (14).

5. Dispositif de montage selon l'une des revendications précédentes, caractérisé en ce que la butée d'arrêt (21) rencontre le fond du renfoncement (22) en position d'indexage.

6. Dispositif de montage selon l'une des revendications précédentes, caractérisé en ce que l'attache (1) est un anneau de levage moteur.

7. Procédé de montage d'un support de conduit (2) sur un organe mécanique avec indexage automatique de ce support sur une attache intermédiaire (1) rapportée sur ledit organe, et munie d'une patte (7) disposant d'un trou de fixation (8) et d'un doigt d'indexage (9) séparés par un renfoncement (22), caractérisé en ce qu'on introduit verticalement le support (2) sur le doigt d'indexage (9), avant de l'engager autour de la patte (7) par un mouvement de rotation horizontal autour du doigt, jusqu'à sa position d'indexage.

8. Procédé de montage selon la revendication 7, caractérisé en ce que la position d'indexage est atteinte lorsque le support (2) vient en butée contre le fond du renfoncement (22) de l'attache (1).

9. Procédé de montage selon la revendication 7 ou 8, caractérisée en ce que le support (2) est retenu en position d'indexage par un bossage (17) pénétrant dans le trou de fixation (8).

10. Procédé de montage selon la revendication 7, 8, ou 9, caractérisé en ce que le démontage s'effectue en exerçant une poussée verticale sur le bossage (17) au travers trou (8), de façon, à autoriser son retrait de celui-ci, et le dégagement du support (2) à l'écart de la patte (6).
